# Europäisches Patentamt
# European Patent Office
# Office européen des brevets

(19)

(11) Publication number: **0 006 031**
**B1**

(12) **EUROPEAN PATENT SPECIFICATION**

(45) Date of publication of patent specification: **22.06.83**

(51) Int. Cl.³: **G 01 N 1/00, B 01 L 9/06**

(21) Application number: **79301061.2**

(22) Date of filing: **05.06.79**

(54) Device for receiving cartridges and cartridges therefor.

(30) Priority: **05.06.78 US 912288**
**09.05.79 US 37250**

(43) Date of publication of application:
**12.12.79 Bulletin 79/25**

(45) Publication of the grant of the patent:
**22.06.83 Bulletin 83/25**

(84) Designated Contracting States:
**DE FR GB**

(56) References cited:
**DE - A - 1 921 302**
**DE - A - 2 553 129**
**FR - A - 2 236 181**
**FR - A - 2 350 593**
**FR - A - 2 361 651**
**US - A - 4 142 863**

(73) Proprietor: **EASTMAN KODAK COMPANY**
**Patent Department 343 State Street**
**Rochester, New York 14650 (US)**

(72) Inventor: **Covington, Roger Galen**
**Kodak Park**
**Rochester New York (US)**
Inventor: **Miller, Stephen Henry**
**Kodak Park**
**Rochester New York (US)**
Inventor: **Jessop, Thomas C.**
**Kodak Park**
**Rochester New York (US)**

(74) Representative: **Pepper, John Herbert et al,**
**KODAK LIMITED Patent Department P.O. Box 114**
**190 High Holborn**
**London WC1V 7EA (GB)**

Courier Press, Leamington Spa, England

Device for receiving cartridges and cartridges therefor

This invention relates to a device for receiving cartridges containing test elements, and to such cartridges.

Chemical analyzers have been developed for performing quantitative analyses of samples of biological fluids, such as blood serum, to enable the physician to obtain a more complete picture of a person's physical condition. Recent developments have provided test elements in essentially planar, dry form which can be loaded into a cartridge adapted to be removably mounted in an analyzer. In the use of the analyzer, a test element is fed from a cartridge into a metering station where a predetermined amount of sample fluid is deposited on the test element. The element is then moved to a read station where a change in the test element is sensed, the amount of change being proportional to the concentration of a particular analyte in the sample fluid. The test element is used only once and is discarded after the reading has been taken.

Cartridges of the type described above are normally loaded with test elements for performing a single test, for example an analysis of the concentration of sodium ions in blood serum. The cartridges must be generally uniform in size and shape, regardless of the type of test element which they contain, since each of the cartridges must fit into cartridge support structure of fixed dimensions. Thus, there is a problem that a cartridge containing the wrong type of element for the test desired may be inserted in the analyzer, particularly in a busy laboratory where many samples are analyzed daily. This, of course, results in erroneous test results and in a loss of valuable time when the analyses must be performed under emergency conditions.

French Patent Specification FR—A— 2 236 181, discloses clinical apparatus which comprises a number of test stations and a support means at each of the stations for receiving a test-tube carrier. Each carrier includes a key member which cooperates with a key slot in each support means. The location of the key slot in each support means is different from the others so that a carrier having a key member at a particular location can be placed at only one test station; there is no provision for adjusting a support means to accept a carrier having a key member at a different location. Thus, such an arrangement does not solve the problem of insuring that the proper cartridge is loaded in an analyzer having a test station which is adapted to receive a plurality of cartridges each of which contains a different type of test element.

It is an object of one aspect of the present invention to overcome the above-mentioned problem in a device for use with a cartridge containing test elements of one of a plurality of types, the device including means for receiving a cartridge and being adapted to operate with a cartridge having a code indicative of the type of the elements it contains.

According to this one aspect of the invention such a device is characterised by adjustable discriminator means for cooperation with the code on the cartridge to allow or prevent receipt of the cartridge according to the form of the code and the condition of the discriminator means, the code being one of a plurality of codes present one on each of a range of cartridges and being indicative of the type of test elements present in the cartridge of which it is part. The condition of the discriminator means is adjustable to sense a selected one of said plurality of codes so that the type of the elements in a cartridge which is received can be governed.

In furtherance of the object of overcoming the above-mentioned problem, another aspect of the present invention provides a cartridge receivable in a device which has adjustable discriminator means for cooperation with a code on the cartridge to allow or prevent receipt of the cartridge in the device. The cartridge is characterised in that it contains generally planar test elements of one of a plurality of types, said cartridge having a code thereon, the code being indicative of the type of test elements present in the cartridge of which it is part and being cooperable with the adjustable discriminator means.

Embodiments of the present invention will now be described, by way of example, with reference to the accompanying drawings, in which:

Fig. 1 is a perspective view of a reagent supply station of a chemical analyzer, showing a cartridge support means and a cartridge discriminator, including a first form of sensing wheel, constructed in accordance with a preferred embodiment of the invention;

Fig. 2 is a perspective view showing a cartridge positioned for insertion into the cartridge chamber of an analyzer;

Fig. 2a is a diagrammatic fragmentary plan view of the chamber into which the cartridge is to be inserted;

Fig. 3 is an exploded view of a cartridge, showing the cartridge casing, a test element stack, and stack positioning element;

Fig. 4 is a perspective view of another form of sensing wheel included in a second embodiment of the invention.

Fig. 5 is an elevational view, partially in section, of the cartridge support means in combination with the sensing wheel shown in Fig. 4;

Fig. 6 is a partial view with parts broken away for the sake of illustration, of a third embodiment of the present invention; and

Fig. 7 is a sectional view taken generally on the line VII—VII in Fig. 6 when the cartridge is in its nest.

The invention is described hereinafter in connection with an analyzer for performing quantitative chemical analyses of biological fluids, such as blood serum.

The invention is particularly useful with potentiometric analysers in which case the substrate which makes the test possible comprises a pair of electrodes selective to the ion activity of choice. Recent developments have provided these electrodes in essentially planar, dry form, suitable for use in pairs in an analyzer. The invention can also be employed in an analyzer using a radiometric detector which will read a suitable subtrate incorporating, for example, reagents that create a dye in proportion to concentration of the analyte being measured.

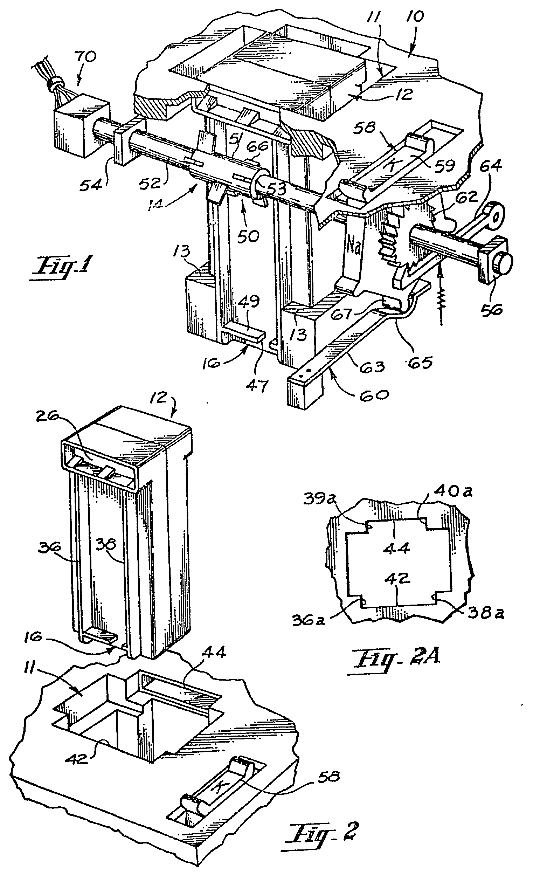

In accordance with a preferred embodiment of the invention, there is shown in Fig. 1 a test element supply station of an analyzer which includes a cartridge support means 10. Support means 10 comprises walls 13 which define a chamber 11 for receiving a cartridge 12 containing test elements for use in the analyzer. As will be described in more detail hereinafter, a cartridge discriminator 14 is adapted to interact with a code means 16 on cartridge 12 to ensure that only a cartridge containing the proper test elements is installed on the analyzer.

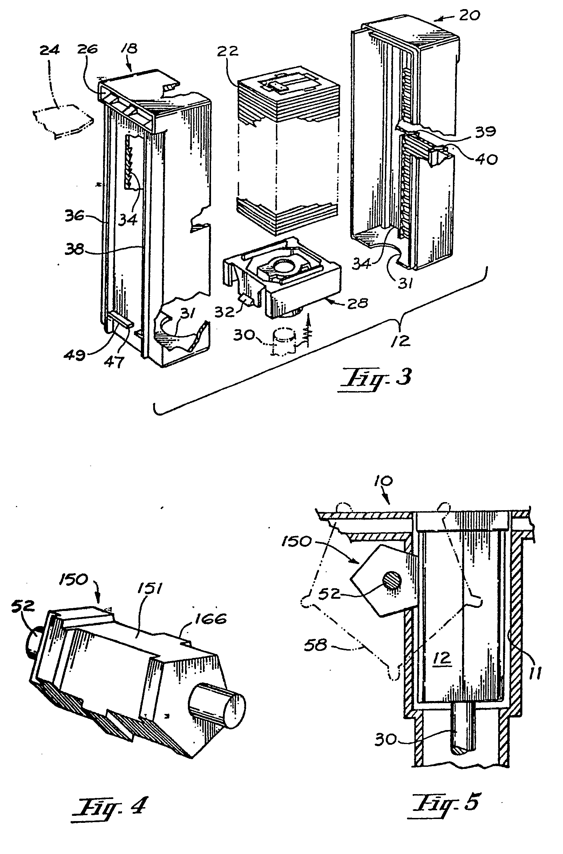

As shown in the exploded view in Fig. 3, the cartridge 12 is generally rectangular in cross section and is formed from a pair of casing sections 18 and 20 which are permanently sealed together to enclose a stack of test elements 22 each of which contains the reagents necessary for performing a selected test. Test elements 22 are adapted to be sequentially fed from cartridge 12 by a transfer means having a push blade 24, shown in phantom in Fig. 3, which enters through a slot 26 and forces a test element 22 in a dispensing position out of the cartridge 12 through an exit slot (not shown). A stack-positioning element 28 bears against the lowermost test element 22 in the stack and is biased upwardly by a spring loaded plunger 30, shown in phantom in Fig. 3, which extends into the cartridge 12 through an aperture 31 in its bottom wall. Stack positioning element 28 comprises a pair of pawls 32 on opposite sides thereof which are adapted to engage ratchet teeth 34 to prevent movement of the test elements 22 downwardly away from the dispensing position.

To ensure proper orientation of cartridge 12 in chamber 11, cartridge casing section 18 is provided with a pair of vertical rails 36, 38; and casing section 20 is provided with vertical rails 39, 40 which are spaced more closely that rails 36, 38.

As shown in Fig. 2A, chamber 11 is provided with channels 42 and 44, the channel 44 being narrower than channel 42 so that it can accept only the more closely spaced rails 39, 40, and not the more widely spaced rails 36, 38. This arrangement in addition to the non-square, rectangular sectional shape of the cartridge 12 prevents insertion of the cartridge 12 in the chamber 11 in any orientation other than that required. The rails 36, 38, 39, 40 cooperating with walls 36a, 38a, 39a, 40a, respectively, also serve to accurately control the position of the cartridge 12 during insertion and while in the chamber 11.

Cartridge 12 is secured in the chamber 11 by means of a hinged cover member (not shown).

The type of test element 22 contained in cartridge 12 is indicated by code means 16 on the cartridge 12. Code means 16 comprises a web 49 having tactile discontinuities thereon in the form of a notch, as shown at 47. Each of the types of test elements is assigned a unique notch code, the different codes being formed by varying the location of the notch 47. Although the code means 16 is shown as having only one notch 47 in respect of each notch code a plurality of notches 47 could in fact be used in respect of each notch code.

Test elements 22 suitable for use in the device and cartridge of the subject invention are disclosed in U.S. Patents Nos. 4,053,381 and 3,992,158.

Cartridge discriminator 14 (Fig. 1) is provided to ensure that only a cartridge 12 containing test elements 22 for a selected analyte can be installed on the analyzer. Cartridge discriminator 14 comprises a sensing wheel 50 which includes a central hub 51 and projections 66 extending radially from the hub. Sensing wheel 50 is carried on a shaft 52 journalled in supports 54, 56 in the analyzer.

Sensing wheel 50 is adjustable to five angular positions by a control means which includes a control knob 58 mounted on shaft 52. The projections 66 are circumferentially and axially positioned on hub 51 such that, in each of the angular positions of wheel 50, a different combination, or pattern, of projections 66 extends into chamber 11 and is in a position to interact with code means 16 on cartridge 12.

Thus, as shown in Fig. 1, a projection 66 at one axial end 53 of central hub 51 is positioned such that only a cartridge 12 having a notch 47 in the position shown could be installed in chamber 11. Control knob 58 has a plurality of faces 59, only one of which is visible to the operator at any one time. The face 59 which is in the visible, or "up", position in Figure 1 is marked with the symbol "K" for potassium, indicating that the apparatus is programmed for a potassium test as will be explained hereinafter, and that sensing wheel 50 is positioned to permit insertion of a cartridge 12 having a code means 16 corresponding to potassium test elements. In a like manner, when the face 59, labelled "Na" for sodium, is moved to the "up" position, the apparatus will be conditioned for a sodium analysis. A detent 60 is provided to position knob 58 and to precisely locate wheel 50 relative to the chamber 11 in each of its angular positions; detent 60 comprises a leaf spring 63 having an indentation 65 which is adapted to releasably receive protuberances 67 on the control knob 58. A ratchet wheel 62 cooperates with a pawl 64 to provide an anti-backup device for control knob 58; thus, as shown in Fig. 1, knob 58 can only be rotated in a counterclockwise direction.

Ratchet wheel 62 and pawl 64 also function to prevent rotation of shaft 52 when an attempt is made to insert a cartridge 12 containing the wrong type of test elements 22 into chamber 11. With reference to Fig. 1, it will be seen that a torque on shaft 52 in a clockwise direction is created when a web 49 is moved down into abutment with a projection 66; clockwise movement of shaft 52 is prevented by ratchet wheel 62 and pawl 64, and hence, further insertion of cartridge 12 is not possible.

A detector 70 is provided to sense the position of shaft 52, the shaft position being indicative of the particular test selected by the operator, and to transmit the test selection to the analyzer computer (not shown). Detector 70 could take the form of an encoder wheel and a photoelectric detector, or it could be a set of switches which are coupled to logic circuitry. Information stored in the computer for the particular test selected will be utilized in processing the data produced by the test.

By having the cartridge discriminator 14 located adjacent the mouth of the chamber 11 and by having the code means 16 located adjacent the leading end of the cartridge 12, prevention of insertion of a wrong type of cartridge 12 will occur very early in the movement of the cartridge 12 into the chamber 11. Hence it will be blatantly apparent that there is an error.

The cooperation of the rails 36, 38, 39, 40 with the walls 36a, 38a, 39a, 40a, serves to ensure that the position of the cartridge 12 and hence of a notch 47 in the web 49, is accurately determined as the web 49 approaches the cartridge discriminator 14 upon an attempt being made to insert the cartridge 12.

A second embodiment of the invention is, in all respects except that of the form of the sensing wheel, identical to the first embodiment described above. Accordingly only the sensing wheel will be described below. For an understanding of other aspects of the second embodiment reference should be made to the description and illustrations of the first embodiment.

In the second embodiment a sensing wheel 150, illustrated in Figs. 4 and 5, is included instead of the sensing wheel 50. Sensing wheel 150 mounted on shaft 52, is of generally polygonal cross-sectional form and comprises a plurality of generally planar surfaces 151 having projections 166 formed thereon. Each projection 166 is adapted to cooperate with a notch 47 in the web 49 of a cartridge 12 in the same manner as described previously for projections 66. Wheel 150 can be moulded, or projections 166 can be formed by a machine operation. One particular advantage in the use of sensing wheel 150 is that the wheel 150 cannot be rotated when a cartridge 12 is installed in chamber 11, because of the length of the projections 166. (see Fig. 5.) Thus, the control knob 58 setting cannot be accidentally changed when a cartridge 12 is installed in the analyzer.

In operation of the first and second embodiments, control knob 58 is first moved to position a face 59 bearing the notation for the desired test, in the "up" position, e.g. for potassium as shown in Fig. 1. Next, a cartridge 12 containing test elements 22 for performing the desired test is inserted in chamber 11. If the proper cartridge 12 is selected, the code means 16 on the cartridge 12 will be located such that the projection(s) 66 (or 166) on the sensing wheel 50 (or 150) will pass through the notch(es) 47, and the cartridge 12 will move into the position shown in Fig. 1. If the wrong cartridge 12 is selected, web 49, will abut against the projection(s) 66 or 166 and the cartridge 12 will not move to the loaded position.

It will be apparent from the foregoing description that embodiments of the invention are particularly suitable for ensuring that only test elements appropriate for a desired test are installed on the analyzer and that the analyzer is properly programmed, for the selected tests. Thus, costly mistakes, resulting from loading the analyzer with reagents which do not conform to a desired test, can be avoided. A single-channel analyzer can be conditioned to accept cartridges bearing a number of different notch codes. Further, a plurality of identical channels, each having a cartridge discriminator 14 can be combined to form a multi-channel analyzer capable of simultaneously performing different tests. Use of the same components in each channel greatly facilitates the manufacture and repair of such a multi-channel analyzer.

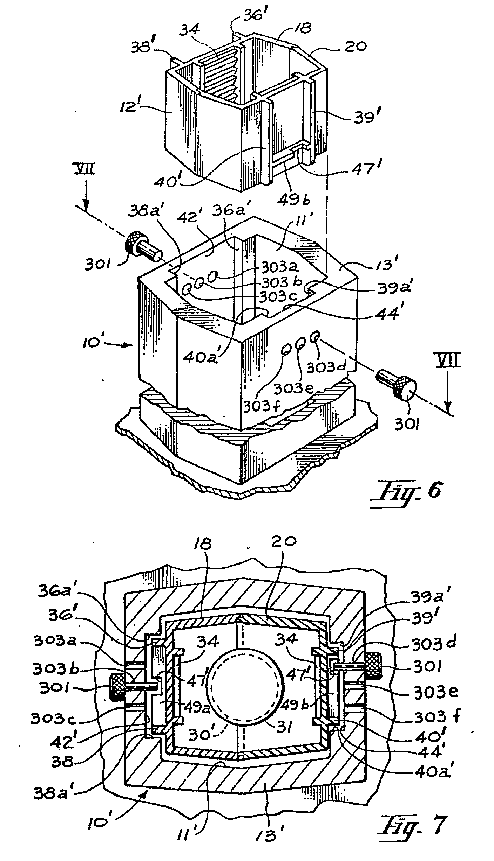

A third embodiment of the present invention is illustrated in Figs. 6 and 7. This third embodiment is intended for cooperation with a cartridge substantially the same as that already described herein, except that it has two webs 49. Therefore there will be no repetition of the description of the cartridge 12.

Only those features of the third embodiment which differ from the first and second embodiments will now be described. Features which are structurally and/or functionally the same as features in the first and/or second embodiment will be given the same reference numerals but with the addition of a prime (') suffix. For an understanding of features not described in this third embodiment reference should be made to the foregoing description and Figs. 1 to 5 herein.

In this third embodiment the cartridge discriminator consists of pins 301 received in bores 303 in walls 13' of the cartridge support means 10'. In the embodiment illustrated there are three bores 303a, b, c aligned with the three possible sites of notches 47' in the web 49a and there are three bores 303d, e, f, aligned with the three possible sites of notches 47' in the web 49b. The web 49a is disposed between the rails 36' and 38', and the web 49b is disposed between the rails 39' and 40'.

The pins 301 are long enough so that when inserted into bores 303 they extend from the inner surface of the walls 13' and into the path of an unnotched web 49' as the cartridge is inserted into its chamber 11'.

Thus, any one pin 301 will prevent full and proper insertion of a cartridge 12 into the chamber 11' unless a notch 47' is aligned with the pin 301.

Let it be assumed that the operator wishes to perform tests for potassium. He will set up the apparatus so that only test elements 22 appropriate for potassium tests can be supplied to the apparatus. Let it further be assumed that cartridges containing test elements for potassium tests have a notch 47' in the middle of web 49a and a notch 47' adjacent rail 39' (as is illustrated in Fig. 7). The operator will insert a pin 301 in bore 303b and a pin in bore 303d. The ends of such pins will not prevent insertion of a cartridge containing potassium test elements 22 because the notches 47' will allow the pin ends to pass relatively through the webs 49a and 49b. However, any location of the notches 47' other than that shown will cause interference between a web or the webs and a pin or the pins and hence prevent full and proper insertion of the cartridge 12'. The operator will notice that full insertion of the cartridge 12' is prevented and will be caused to check the cartridge 12'.

In Fig. 7, the cartridge is illustrated without any test elements therein and with the stack-positioning element removed, for the sake of illustration.

In the first and second embodiments the cartridge discriminator 14 includes a single sensing wheel 50, 150 respectively for cooperation with code means 16, on the cartridge 12, which includes a single web 49. It should be understood that apparatus otherwise similar to the first and second embodiments may include two sensing wheels 50, 150 for cooperation one with each of two webs 49 arranged, perhaps, in the manner of the third embodiment.

As will be apparent from the above description, the third embodiment does not have some of the advantageous features of the first and second embodiments.

Further alternative arrangements of the present invention include the use of a bar code which is optically read or a magnetically sensed code.

**Claims**

1. A device for use with a cartridge (12) containing test elements (22) of one of a plurality of types, the device including means for receiving a cartridge and being adapted to operate with a cartridge having a code indicative of the type of the elements it contains, characterised by adjustable discriminator means (14; 301, 303) for cooperation with the code (16) on the cartridge (12) to allow or prevent receipt of the cartridge (12) according to the form of the code (16) and the condition of the discriminator means (14; 301, 303), the code (16) being one of a plurality of codes (16) present one on each of a range of cartridges and being indicative of the type of test elements (22) present in the cartridge (12) of which it is part, and the condition of the discriminator means (14; 301, 303) being adjustable to sense a selected one of said plurality of codes (16) so that the type of the elements (22) in a cartridge (12) which is received can be governed.

2. A device according to claim 1 characterised in that the code (16) on the cartridge (12) is tactile, and the adjustable discriminator means (14; 301, 303) is adapted to sense the tactile code (16).

3. A device according to claim 2, characterised in that the discriminator means includes elements (66; 166, 301) which can be selectively positioned to form a plurality of distinct element patterns, each of said element patterns being adapted to cooperate with a specific respective code (16) on the cartridge (12).

4. A device according to claim 3, characterised in that the code (16) includes a web (49) having a notch (47) therein, and the discrimina- means includes a sensing wheel (50; 150) mounted for rotation, and. the elements are radial projections (66, 166) on the sensing wheel (50; 150).

5. A device according to claim 3, characterised in that the code (16) includes a web (49) having a notch (47) therein, and the dicriminator means includes at least one pin (301) mountable in a selected one of a plurality of positions (303), each of said positions being related to a respective one of the plurality of possible locations of the notch (47), a portion of the pin (301) being so disposed as to interfere with the web (49) when endeavours are made to insert a cartridge (12) containing test elements (22) of a type other than that appropriate to the positional setting of the pin (301).

6. A device according to claim 4, characterised in that the sensing wheel (150) includes a portion having a polygonal sectional form and the elements are rib-like raised portions (166) of the polygonal sectional form portion.

7. A device according to claim 4 or 6, characterized by an anti-backup device (62, 64) for preventing rotation of the sensing wheel (50) under the influence of the cartridge (12) upon the cartridge being inserted.

8. A device according to claim 4, 6 or 7, characterised by means (70, 59) associated with the discriminator means (14) for producing a signal indicative of the condition of the discriminator means.

9. A device according to claim 4, 6, 7 or 8, characterised in that the sensing wheel (50, 150) has a plurality of stable positions, the number of positions corresponding to the number of different tests, and in that said projections (66; 166) are disposed in a like number of positions circumferentially of the wheel and are disposed axially at each position to create a unique pattern.

10. A device according to claim 9, characterised by a control knob (58) manually rotatable to set the sensing wheel (50, 150), the knob having indicia indicative of the types of test.

11. A device accordimg to any one of the preceding claims, characterised in that said means for receiving a cartridge includes a chamber (11; 11') having channels (42, 44; 42', 44') in opposite walls, and that the discriminator (14; 301, 303) projects into at least one of said channels.

12. A cartridge for cooperation with the device of claim 1 which has adjustable discriminator means for cooperation with a code on the cartridge to allow or prevent receipt of the cartridge in the device, characterised in that said cartridge (12) contains generally planar test elements (22) of one of a plurality of types, said cartridge having a code (16) thereon, the code being indicative of the type of test elements (22) present in the cartridge of which it is a part and being cooperable with the adjustable discriminator means.

13. A cartridge according to claim 12, characterised in that the code (16) on the cartridge (12) is tactile, and the tactile code (16) includes a web (49) having a notch (47).

14. A cartridge according to claim 13, characterised in that the tactile code (16) is adjacent that end of the cartridge (12) which leads upon insertion of the cartridge into the device.

15. A cartridge according to claim 13, characterised in that the cartridge (12) includes a pair of rails (36, 38; 39, 40) extending parallel to the longitudinal axis of the cartridge, and said web (49) extends between said rails.

**Revendications**

1. Dispositif à utiliser avec un chargeur (12) contenant des articles d'essai (22) d'un type choisi parmi plusieurs, le dispositif comprenant un moyen de réception d'un chargeur, conçu pour fonctionner avec un chargeur muni d'un organe de codage indicatif du type des articles qu'il contient, caractérisé par un moyen de discrimination réglable (14; 301,303) prévu pour coopérer avec l'organe de codage (16) du chargeur (12) de manière à autoriser, ou à empêcher, la réception du chargeur (12) en fonction de la forme de l'organe (16) et de l'état du moyen de discrimination (14; 301, 303), l'organe (16) étant l'un de plusieurs organes (16) présents individuellement sur chacun des chargeurs d'une série, cet organe étant indicatif du type des articles d'essai (22) contenus dans le chargeur (12) dont il fait partie, l'état du moyen de discrimination (14; 301, 303) étant réglable pour assurer la détection d'un organe de réglage (16) choisi parmi plusieurs de manière à déterminer le type des articles (22) d'un chargeur (12) admis dans le dispositif.

2. Dispositif conforme à la revendication 1, caractérisé en ce que l'organe de codage (16) du chargeur (12) est palpable, et en ce que le moyen de discrimination réglable (14; 301, 303) est conçu pour palper cet organe (16).

3. Dispositif conforme à la revendication 2, caractérisé en ce que la moyen de discrimination comprend des éléments (66; 166, 301) qui peuvent être sélectivement agencés suivant diverses configurations, chaque configuration étant adaptée pour coopérer avec un organe de codage (16) spécifique associé, formé sur le chargeur (12).

4. Dispositif conforme à la revendication 3, caractérisé en ce que l'organe de codage est formé par une nervure (49) à encoche (47), en ce que le moyen de discrimination comprend une roulette de palpage (50, 150) montée à rotation, et en ce que les éléments sont des pattes radiales (66; 166) montées sur la roulette (50; 150).

5. Dispositif conforme à la revendication 3, caractérisé en ce que l'organe de codage est formé par une nervure (49) à encoche (47) en ce que le moyen de discrimination comprend au moins une cheville (301) qui peut être montée dans une position choisie parmi plusieurs positions (303), chacune de ces positions étant associée à l'une de plusieurs positions possibles pour l'encoche (47), une partie de la cheville (301) étant agencée de manière à buter sur la nervure (49) quand on tente d'installer un chargeur (12) comprenant des articles d'essai (22) d'un type autre que celui approprié à la position choisie pour la cheville (301).

6. Dispositif conforme à la revendication 4, caractérisé en ce que la roulette de palpage (150) présente une partie de section polygonale et en ce que les éléments sont des parties (166) en forme de nervures débordant de la partie de section polygonale.

7. Dispositif conforme à l'une quelconque des revendications 4 et 6, caractérisé par un dispositif anti-retour (62, 64) pour empêcher une rotation de la roulette de palpage (50) sous l'action du chargeur (12) lors de l'insertion de celui-ci.

8. Dispositif conforme à l'une quelconque des revendications 4, 6 et 7, caractérisé par des moyens (70, 59) associé au moyen de discrimination (14) pour produire un signal représentatif de l'état du moyen de discrimination.

9. Dispositif conforme à l'une quelconque des revendications 4, 6, 7 et 8, caractérisé en ce que la roulette de palpage (50, 150) peut prendre plusieurs positions stables, en nombre egal au nombre d'essais différents, et en ce que lesdites pattes (66; 166) sont agencées en un même nombre de positions sur la circonférence de la roulette, chacun en une position axiale unique pour définir une configuration particullière.

10. Dispositif conforme à la revendication 9, caractérisé par une molette (58) qu'on fait tourner manuellement pour régler la roulette de palpage (50, 150), cette molette, étant munie de repères indicatifs des différents types d'essai.

11. Dispositif conforme à l'une quelconque des revendications précédentes, caractérisé en ce que les moyens de réception d'un chargeur comprennent une chambre (11; 11') présentant des rainures (42, 44; 42', 44') formées dans des parois opposées, et en ce que le moyen de discrimination (14; 301, 303) déborde dans au moins une de ces rainures.

12. Chargeur prévu pour coopérer avec le dispositif conforme à la revendication 1, qui comprend un moyen de discrimination réglable coopérant avec un organe de codage du chargeur pour autoriser, ou empêcher, la réception du chargeur dans le dispositif, caractérisé en ce que ce chargeur porte un organe de codage (16) indicatif du type des articles d'essai (22) contenu dans le chargeur et prévu pour coopérer avec le moyen de discrimination réglable.

13. Chargeur conforme à la revendication 12, caractérisé en ce que l'organe de codage (16) du chargeur (12) est à palper et en ce que cet organe est constitué par une nervure (49) présentant une encoche (47).

14. Chargeur conforme à la revendication 13, caractérisé en ce que l'organe de codage palpable (16) est formé près de l'extrémité du chargeur par laquelle on insère celui-ci dans le dispositif.

15. Chargeur conforme à la revendication 13, caractérisé en ce que le chargeur (12) comprend une paire de rails (36, 38; 39, 40) parallèles à l'axe longitudinal du chargeur, la nervure (49) s'étendant entre ces rails.

## Patentansprüche

1. Vorrichtung zur Verwendung mit einer Kassette (12), die Proben (22) eines von mehreren Probentypen enthält, wobei die Vorrichtung Mittel für die Aufnahme einer Kassette aufweist und für eine Kassette geeignet ist, die eine Kodierung besitzt, die angibt, welcher Probentyp in der Kassette enthalten ist, gekennzeichnet, durch eine einstellbare Unterscheidungseinrichtung (14; 301, 303), die für ein Zusammenwirken mit der Kodierung (16) an der Kassette (12) vorgesehen ist und die Aufnahme der Kassette (12) entsprechend der Form der Kodierung (16) und dem Zustand der Unterscheidungseinrichtung (14; 301, 303) entweder zuläßt oder verhindert, wobei jeweils eine Kodierung (16) aus einer Vielzahl von Kodierungen (16) auf jeweils eine Gruppe von Kassetten vorhanden ist und angibt, welcher Probentyp (22) in der Kassette (12) enthalten ist, auf der sie sich befindet, und wobei der Zustand der Unterscheidungseinrichtung (14; 301, 303) so einstellbar ist, daß sie jeweils eine aus der Vielzahl von Kodierungen (16) ausgewählte Kodierung (16) abtastet, so daß bestimmt werden kann, welcher Probentyp (22) in einer in die Vorrichtung aufgenommenen Kassette (12) enthalten ist.

2. Vorrichtung nach Anspruch 1, dadurch gekennzeichnet, daß die Kodierung (16) an der Kassette (12) abtastbar ist und die einstellbare Unterscheidungseinrichtung (14; 301, 303) die abtastbare Kodierung (16) abzutasten vermag.

3. Vorrichtung nach Anspruch 2, dadurch gekennzeichnet, daß die Unterscheidungseinrichtung Elemente (66; 166, 301) umfaßt, die selektiv so einstellbar sind, daß sie mehrere sich voneinander unterscheidende Konstellationen bilden, von denen eine jede für das Zusammenwirken mit einer ganz bestimmten Kodierung (16) an einer Kassette (12) geeignet ist.

4. Vorrichtung nach Anspruch 3, dadurch gekennzeichnet, daß die Kodierung (16) einen Steg (49) mit einer Aussparung (47) aufweist, daß die Unterscheidungseinrichtung ein drehbar gelagertes Tastrad (50; 150) umfaßt und daß die Elemente aus radial verlaufenden Vorsprüngen (66, 166) des Tastrades (50; 150) bestehen.

5. Vorrichtung nach Anspruch 3, dadurch gekennzeichnet, daß die Kodierung (16) einen Steg (49) mit einer Aussparung (47) aufweist und die Unterscheidungseinrichtung mindestens eine Stift (301) umfaßt, der sich wahlweise in einer von mehreren Stellungen (303) anbringen läßt, wobei jede dieser Stellungen mit einer von mehreren möglichen Anordnungen der Aussparung (47) in Beziehung steht und ein Teil des Stiftes (301), so angeordnet ist, daß et dem Steg (49) im Wege ist, wenn versucht wird, eine Kassette (12) mit Proben (22) eines anderen als des Typs einzusetzen, der der gewählten Anordnung des Stiftes (301) entspricht.

6. Vorrichtung nach Anspruch 4, dadurch gekennzeichnet, daß das Tastrad (150) einen Teil mit vieleckiger Querschnittsform aufweist und daß die Elemente aus rippenförmigen, vorspringenden Abschnitten (166) des Teils mit vieleckigem Querschnitt bestehen.

7. Vorrichtung nach Anspruch 4 oder 6, gekennzeichnet durch eine Sperrvorrichtung (62, 64), die eine Drehung des Tastrades (50) unter dem Einfluß der Kassette (12) nach deren Einsetzen verhindert.

8. Vorrichtung nach Anspruch 4, 6 oder 7, gekennzeichnet durch Mittel (70, 59), die der Unterscheidungseinrichtung (14) zugeordnet sind, um ein den Zustand der Unterscheidungseinrichtung anzeigendes Signal zu erzeugen.

9. Vorrichtung nach Anspruch 4, 6, 7 oder 8, dadurch gekennzeichnet, daß das Tastrad (50, 150) mehrere feste Stellungen besitzt, deren Anzahl der Zahl der vershiedenen Probentypen entspricht, und daß die Vorsprünge (66; 166) in der gleichen Zahl von Stellungen rund um das Rad verteilt und axial in der jeweiligen Stellung angeordnet sind, so daß eine unverwechselbare Konfiguration entsteht.

10. Vorrichtung nach Anspruch 9, gekennzeichnet durch einen Einstellknopf (58), der so von Hand drehbar ist, daß dadurch das Tastrad (50, 150) eingestellt wird, und der Markierungen aufweist, die die verschiedenen Probentypen anzeigen.

11. Vorrichtung nach einem der vorhergehenden Ansprüche, dadurch gekennzeichnet, daß die Mittel zur Aufnahme einer Kassette eine Kammer (11; 11') mit Kanälen (42, 44; 42', 44') in einander gegenüberliegenden Wänden umfassen und daß die Unterscheidungseinrichtung (14; 301, 303) in mindestens einen dieser Kanäle hineinragt.

12. Kassette für das Zusammenwirken mit der Vorrichtung gemäß Anspruch 1, wobei die Vorrichtung eine einstellbare Unterscheidungseinrichtung aufweist, die mit einer Kodierung an der Kassette zusammenarbeitet, um das Einsetzen der Kassette in die Vorrichtung entweder zuzulassen oder zu verhindern, dadurch gekennzeichnet, daß die Kassette (12) im wesentlichen plane Proben (22) eines von mehreren Probentypen enthält, wobei an der Kassette eine Kodierung (16) vorgesehen ist, die den Typ der Probe (22) angibt, der in der Kassette enthalten ist, an der sie sich befindet, und die mit einer einstellbaren Unterscheidungseinrichtung zusammenzuwirken vermag.

13. Kassette nach Anspruch 12, dadurch gekennzeichnet, daß die Kodierung (16) an der Kassette (12) abtastbar ist und einen Steg (49) mit einer Aussparung (47) besitzt.

14. Kassette nach Anspruch 13, dadurch gekennzeichnet, daß die abtastbare Kodierung (16) sich benachbart dem Ende der Kassette (12) befindet, das beim Einsetzen der Kassette in die Vorrichtung vorne liegt.

15. Kassette nach Anspruch 13, dadurch gekennzeichnet, daß die Kassette (12) zwei Schienen (36, 38; 39, 40) aufweist, die parallel zur Längsachse der Kassette verlaufen, und daß sich der Steg (49) zwischen diesen Schienen erstreckt.

Fig.1

Fig.2A

Fig.2

_Fig. 3_

_Fig. 4_

_Fig. 5_

Fig. 6

Fig. 7